# EUROPEAN PATENT SPECIFICATION

(11) **EP 2 599 238 B1**
(45) Date of publication and mention of the grant of the patent: **11.03.2020**
(21) Application number: 11812878.4
(22) Date of filing: 30.03.2011
(51) Int. Cl.: H04B 7/0413, H04W 88/08, H04B 7/08

(54) **MULTI-PATH RADIO SYSTEM**
MEHRPFAD-FUNKSYSTEM
SYSTÈME DE RADIOCOMMUNICATION MULTIVOIE

(30) Priority: 28.07.2010 US 368490 P
(43) Date of publication of application: 05.06.2013
(73) Proprietor: AIRGAIN, INC., San Diego, CA 92130 (US)
(72) Inventor: YANG, Xiao, Ping, California 92130 (US); VISURI, Pertti, California 92130 (US)
(74) Representative: Manley, Nicholas Michael
(86) International application number: PCT/US2011/030580
(87) International publication number: WO 2012/015493

(56) References cited:
- WO-A1-2009/080058
- KR-A- 20050 013 009
- US-A1- 2003 162 519
- US-A1- 2006 268 962
- US-A1- 2007 049 347
- US-A1- 2007 071 149

## Description

### BACKGROUND

### 1. Field

This invention relates generally to MIMO antenna systems, and to MIMO antenna signal combiners.

### 2. Background

Wireless communications systems can facilitate two-way communications between a plurality of customers or stations in a fixed or variable network infrastructure. The wireless communication systems provide communication channels between the stations and their respective base stations or access points in order to connect a station's unit end-user with a fixed-network infrastructure (usually a wire-line system). Standards have been adopted and proposed for certain types of wireless communication systems. For example, the IEEE 802.11 standard defines certain operational aspects of a wireless communication system as does the proposed IEEE 802.16 standard.

Reference is made to WO 2009/080058 A1, which discloses a communication system, such as a Multiple Input Multiple Output (MIMO) system operating in a spatial multiplexing (SM) mode, for use e.g. in a WLAN or HSDPA device, a plurality of information flows are received via a set of receive antennas by: deriving from at least some, and possibly all of the receive antennas respective RF signals, and producing from the RF signals thus derived a plurality of receive signals, each receive signal to be demodulated to recover one of the information flows transmitted. The receive signals are produced as combinations of the RF signals having applied thereto relative RF phase shift weights.

Reference is also made to US 2003/162519 A1, which describes an arrangement whereby the number of transmit or receive chains can be reduced, in order to reduce costs in multiple-input-multiple-output (MIMO) transmit or receive diversity wireless communications systems. Switched antenna selection is used at the transmitter or receiver. Particular advantages are found for nomadic and high speed mobility MIMO user terminals where improvements in capacity are found. In addition improved ability to deal with the effects of spatial fading is achieved. Embodiments using directional antennas in combination with switched selection are also described. These are particularly advantageous for compact user equipment intended for nomadic or mobile use,

Further reference is made to US 2007/049347 A1, which discloses a system and method for configuring an antenna array having a predetermined number of antennas. After providing an antenna correlation matrix for all antennas with regard to a mobile terminal, the antenna array is virtually partitioned into two or more sub-arrays based on the antenna correlation matrix such that correlations among antennas within each sub-array are higher than correlations among antennas belonging to different sub-arrays. One or more beamforming weights are generated corresponding to each antenna within the sub-arrays for applying to one or more signals transmitted therefrom, and at least one predetermined multiple-input-multiple-output (MIMO) mechanism is further applied among the sub-arrays by treating each sub-array as a virtual antenna.

### SUMMARY

In one embodiment, a multiple-in, multiple-out (MIMO) radio system for use in a multi-path environment comprises: a plurality of antenna subsystems; and a MIMO processor; wherein at least one of the plurality of antenna subsystems comprises: a plurality of antennas, a plurality of controlled phase shifters, and a combiner configured to combine signals received via the plurality of antennas in a ratio, wherein each but one of the plurality of antennas is connected to the combiner via a respective one of said phase shifters, wherein at least one of the plurality of antenna is a directional-agile antenna and at least one of the plurality of antenna is an omni-directional antenna, wherein the directional-agile antenna is directed for both transmitting and receiving in more than one direction or pattern; wherein the directional-agile antenna and omni-directional antenna are positioned at different locations to receive different Eigen modes of the same transmitted signal; wherein the system further comprises a radio for each of the plurality of antenna subsystems configured to demodulate the combined signal; and wherein the MIMO processor is configured to select a MIMO processing technique from a group comprising maximum ratio combining and spatial multiplexing; wherein the MIMO processor is further configured to, when using maximum ratio combining, produce a single data stream from the plurality of demodulated signals by combining the plurality of demodulated signals in a weighted manner wherein at least one of the plurality of demodulated signals is assigned a weight of zero; and wherein a central processing unit implements a combination feedback loop configured to selectively alter the manner in which the signals received by multiple antennas corresponding to a single radio are combined.

In another example that does not form part of the claimed invention, a multiple-in, multiple-out (MIMO) radio system for use in a multi-path environment is provided. The system includes a plurality of antenna subsystems. Each subsystem includes two or more antennas, a controller for altering the gain of a signal received via one of the two or more antennas, and a combiner configured to combine signals received via the two or more antennas in a ratio. The system further comprises a radio for each of the plurality of antenna subsystems configured to demodulate the combined signal and a MIMO processor configured to produce a single data stream from the demodulated signals.

In another example that does not form part of the claimed invention, a multiple-in multiple-out (MIMO) radio system for use in a multi-path environment is provided. The system includes a plurality of antenna subsystems, Each subsystem includes two or more antennas, a controller for altering the gain of a signal received via one of the two or more antennas, and a combiner configured to combine signals received via the two or more antennas in a ratio. The system further comprises a radio for each of the plurality of antenna subsystems configured to demodulate the combined signal, a MIMO processor configured to produce a single data stream from the demodulated signals, and a processor. The processor is configured to determine a quality metric based on the processed signal from the MIMO processor and modify the ratio based at least in part on the quality metric.

In another example that does not form part of the claimed invention, a method of operating a multiple-in, multiple-out (MIMO) radio system for use in a multi-path environment is provided. The MIMO radio system includes a first set of antennas coupled to a first combiner that is coupled to a first radio, a second set of antennas coupled to a second combiner that is coupled to a second radio, and a MIMO processor for processing the signals from the first and second radios. The method includes receiving signals via the first set of antennas, combining the signals from the first set of antennas into a first combined signal using a first radio, demodulating the first combined signal, receiving signals via the second set of antennas, combining the signals from the second set of antennas into a second combined signal using a second ratio, demodulating the second combined signal, and processing the demodulated signals into a single data stream.

### BRIEF DESCRIPTION OF THE DRAWINGS

Aspects, advantages and details of the present invention, both as to its structure and operation, may be gleaned in part by a study of the accompanying drawings, in which like reference numerals refer to like parts. The drawings are not necessarily to scale, emphasis instead being placed upon illustrating the principles of the invention.
Figure 1 is a functional block diagram of a wireless network;
Figure 2 is a functional block diagram of an example of a wireless communication device;
Figure 3 is a functional block diagram of an embodiment of a wireless communication device;
Figure 4 is a functional block diagram of an embodiment of antenna subsystems from the antenna system of Figure 3; and
Figure 5 is a functional block diagram of an embodiment of antenna subsystems from the antenna system Figure 3.

### DETAILED DESCRIPTION OF THE EMBODIMENTS

Certain embodiments as disclosed herein provide for methods and systems for signal combiners in MIMO radio systems. After reading this description it will become apparent how to implement the invention in various alternative embodiments and alternative applications. However, although various embodiments of the present invention will be described herein, it is understood that these embodiments are presented by way of example only, and not limitation. As such, this detailed description of various alternative embodiments should not be construed to limit the scope or breadth of the present invention as set forth in the appended claims.

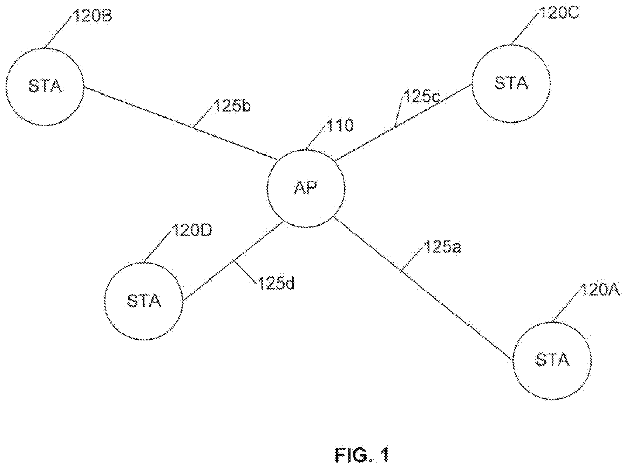

Figure 1 is a block diagram of a wireless network. The network includes a wireless access point (AP) 110. The wireless access point can be, for example, a wireless router, a cellular telephone base station, or other type of wireless communication device. The access point 110 is typically in communication with a back haul connection. For example, it can be in communication with a digital subscriber line (DSL). The access point can include more than one radio transmitter and more than one radio receiver. In general, an access point has the capability to communicate with more than one other device. The access point 110 can employ omni-directional antennas, directional antennas, or configurable antenna systems such as direction-agile antennas.

In one embodiment, the access point 110 includes a configurable antenna system which can be selectively configured to create different antenna gain patterns (antenna patterns) and/or polarizations. For example, the configurable antenna system can include antennas which can be configured to a discrete number of antenna patterns for each of the radio transmitters and receivers in the access point. Alternatively, the configurable antenna system can be configured to transmit and/or receive in different polarizations. In one embodiment the configurable antenna system can be configured to a discrete number of antenna patterns for each of the radio transmitters and receivers in the access point and to different polarizations. An antenna configuration can include an antenna gain pattern and a polarization. In one embodiment the configurable antenna system includes one or more directional antenna systems which allows the access point to direct or steer the gain of the antenna system (for both transmitting and receiving) in more than one direction or pattern for each of the radio transmitters and receivers. Such types of antenna systems are sometimes referred to as direction-agile antennas. Alternatively, the access point can include a single radio transceiver in communication with a single directional antenna system.

The wireless network also includes associated clients or stations (STA) 120A-D. Only four stations are depicted in Figure 1 for ease of description. However, more or fewer stations can be utilized. Each of the stations 120A-D includes one or more antennas for transmitting and receiving wireless signals with the access point 110 via a communication link 125 a-d. Though each of the communication links is depicted as a single line, it should be understood that the links can comprise multiple signal paths, multiple frequencies and can be implemented using multiple radios. The stations 120A-D can employ omnidirectional antennas, directional antennas, or configurable antenna systems such as direction-agile antennas. The systems and methods described herein can be applied to the access point 110 and the stations 120A-D.

The systems and methods described herein can be applied to systems wherein during any one period of time, the access point 110 can either transmit a wireless signal or receive a wireless signal. However, the systems and methods can also be applied to systems that permit simultaneous transmission and reception of wireless signals by the access point 110 and/or the stations 120A-D. For example, the systems and methods described herein can be applied to systems having multiple simultaneous transmission and reception paths. For example, the systems and methods can be applied to MIMO (multiple-in, multiple-out) systems. MIMO systems utilize multiplexing and other techniques of combining signals to increase wireless bandwidth and range. In one embodiment MIMO systems send information out over two or more antennas and the information is received via multiple antennas as well. MIMO systems use the additional pathways to transmit more information and then recombine the signal on the receiving end.

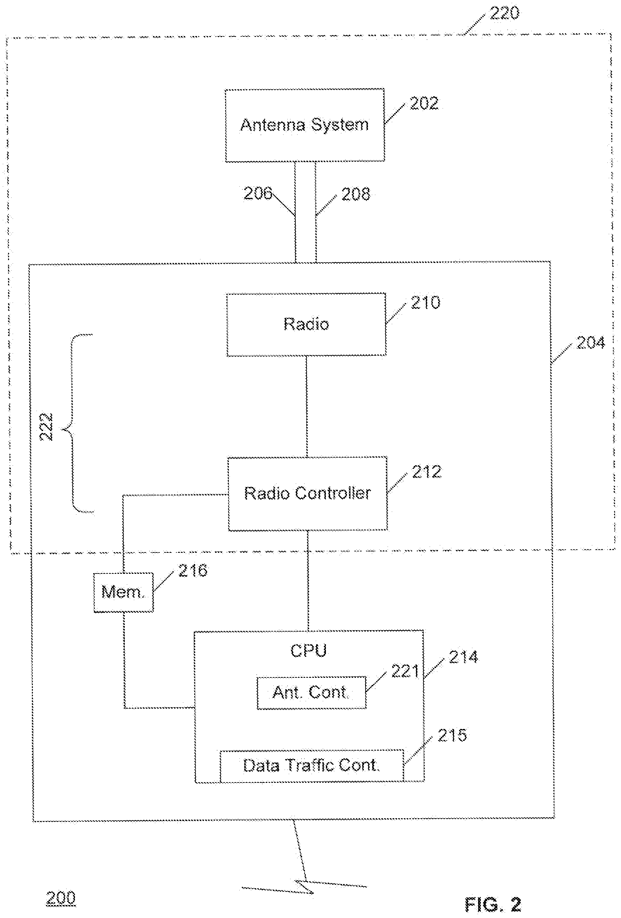

Figure 2 is a functional block diagram of an example of a wireless communication device 200 which can be used as an access point (110 in Figure 1) and/or a station (120A-D in Figure 1). For example, the wireless device can be a wireless router, a fixed or mobile access point, a client or station device or other type of wireless communication device. The communication device 200 includes a configurable antenna system 202 which is in communication with a radio system 204. A control line 206 communicatively couples the antenna system to the radio system to provide a path for control signals. A transmit and receive line 208 couples the antenna system and the radio system for the transmission of transmitted and received signals to and from other wireless devices.

The configurable antenna system 202 can be selectively configured to create different antenna configurations including gain patterns and/or polarizations. For example, the configurable antenna system can include antennas which can be configured to a discrete number of antenna patterns. In one embodiment the configurable antenna system 202 includes one or more directional antennas which allow the antenna system to direct or steer the gain of the antenna system (for both transmitting and receiving) in more than one direction or pattern. Alternatively, the antenna system 202 can be a plurality of switchable omni-directional antennas which can be selectively coupled to the transmit and receive connection 208 of the radio system 204.

The radio system 204 includes a radio transmitter/receiver 210 which is in communication with a radio controller 212. The functions and systems of the radio transmitter/receiver 210 and the radio controller 212 as described herein are also collectively referred to as the radio sub-system 222. The radio generates radio signals which are transmitted by the antenna system 202 and receives radio signals from the antenna system 202. In one embodiment, the radio system 204 converts received radio signals to digital signals which are passed to the radio controller 212.

The radio controller 212 may implement some or all of the media access control (MAC) functions for the radio system. In general, MAC functions operate to allocate available bandwidth on one or more physical channels on transmissions to and from the communication device. The MAC functions can allocate the available bandwidth between the various services depending upon the priorities and rules imposed by their quality of service (QoS) requirements. In addition, the MAC functions operate to transport data between higher layers, such as TCP/IP, and a physical layer, such as a physical channel. However, the association of the functions described herein to specific functional blocks is only for ease of description. The various functions can be moved amongst the blocks, shared across blocks and grouped in various ways.

The central processing unit (CPU) 214 is in communication with the radio controller 212. The CPU 214 may share some of the MAC functions with the radio controller. In addition, the CPU 214 performs higher level functions which are generally referred to as data traffic control and represented by the data traffic control module 215. Data traffic control can include, for example, routing associated with a data traffic on a back haul connection, such as a DSL connection, and/or TCP/IP routing.

In one embodiment, the CPU, or processor 214, determines a plurality of transmit and receive signal quality metrics for connections between the wireless communication device and a plurality of stations for a first of the plurality of radios with a first configurable antenna system in a plurality of configurations. The processor determines a plurality of transmit and receive signal quality metrics for connections between the wireless communication device and the plurality of stations for a second of the plurality of radios with a second configurable antenna system in a plurality of configurations. The processor determines a connection matrix that includes the transmit and receive signal quality metrics for the first and second radios and the plurality of configurations of the first and second configurable antennas. A memory 216 stores the connection matrix. An antenna control module 221 selects an antenna configuration for the first and second antenna configurations based on the connection matrix.

In one embodiment, the data traffic control module 215 controls data flow to the first and second radios so that they transmit and receive independent data streams to a station. In another embodiment, the data traffic control module 215 controls data flow to the first and second radios so they transmit the same data stream to a station. In still another embodiment, the data traffic module 215 controls data traffic flow so that the first radio can transmit a first data stream to a first station and the second radio transmits a second data stream to a second station simultaneously. In yet another embodiment, the data traffic control module 215 controls data flow so that the first radio can transmit data to a first station and the second radio receives data for the first station.

The common or shared memory 216 can be accessed by both the radio controller 212 and the CPU 214. This allows for efficient transportation of packets between the CPU and the radio controller.

In one embodiment control of the antenna system 202 is integrated with the operation of wireless device including the MAC function and QoS (if provided). However, the advantages and benefits of a configurable antenna system can be incorporated into a wireless device with very little integration with such a system. In one embodiment, a radio card (elements in the dashed box 220 in Figure 2) is not modified other than coupling it to a configurable antenna system instead of an omni directional antenna. An antenna control module 221 can be included in the CPU 214. The antenna control module 214 determines the desired antenna configuration and generates the control signals to be sent to the antenna system 202. In response to the control signals, the antenna system changes to the desired configuration. In one embodiment the antenna control module 221 is provided with, or has access to, a signal quality metric for each received signal. The signal quality metric can be provided from the radio 210 or the radio controller 212. As described further below, the signal quality metric can be measured or determined by another device and transmitted to the device 200. The signal quality metric can be used to determine or select the antenna configuration as will be explained more fully below.

The antenna control module 221 is provided with direct or indirect communication to the antenna system 202, for example via control line 206. In one embodiment, the antenna control module operates above the MAC layer of the system. The control signals from the antenna control module 221 can be transmitted directly from the CPU to the antenna system 202 or can be transmitted via the other elements of the radio system 204 such as the radio controller 212 or the radio 210. Alternatively, the antenna control module 221 can reside on the radio controller 212 or the radio 210. The operation of one embodiment of the antenna control module will be described below.

The methods described herein can be implemented within various of the functional blocks of Figure 2. In addition, the methods or functions can be separated into components or modules that are performed by multiple blocks. In one embodiment, the elements within the dashed box 220 in Figure 2 are a radio card (for example, a WLAN PCI card) which is coupled to the processor by a PCI (peripheral component interconnect) bus.

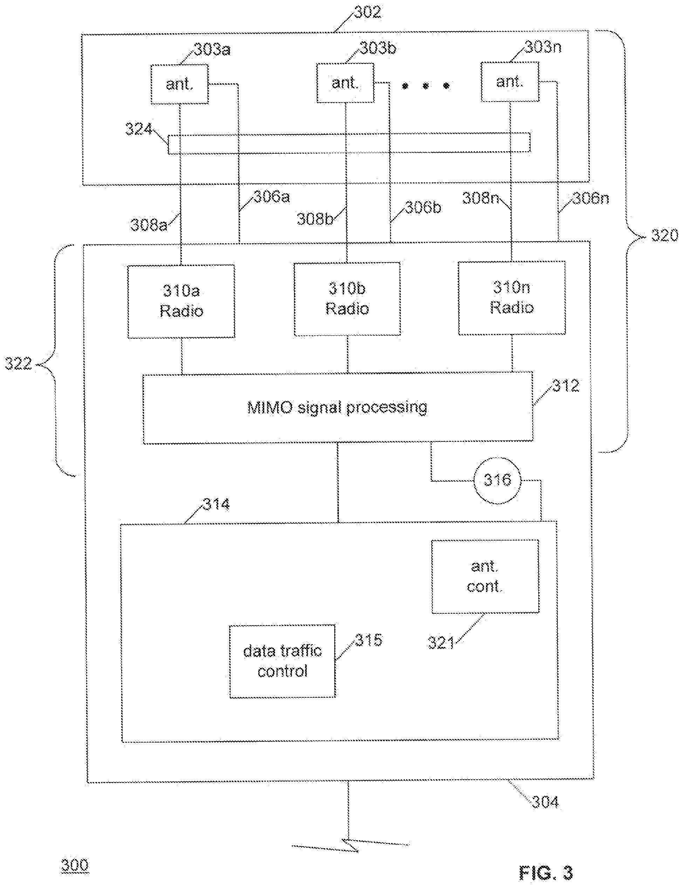

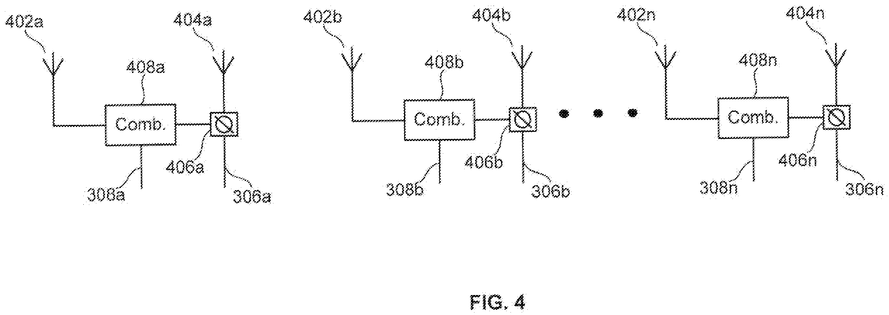

Figure 3 is a functional block diagram of an embodiment of a wireless communication device 300. For example, the wireless device can be a wireless router, a station or client device such as the devices 120A-D, a fixed or mobile access point such as the device 110 or other type of wireless communication device. The wireless communication device 300 is one embodiment of the device 200 of Figure 2 and similar reference numbers indicate similar components. The wireless device 300 implements MIMO (multiple-in multiple-out) technology. In one embodiment, communication device 300 includes an antenna system 302 which is in communication with a radio system 304. The antenna system will be described further in connection with Figure 4. Although three antenna subsystems 303a-n are depicted, more or fewer such antenna subsystems can be used. A plurality of control lines 306a-n communicatively couple the antenna system 302 to the radio system 304 to provide a path for control signals for controlling the antenna subsystems 303a-n. While a single control is shown for each antenna subsystem, it will be appreciated that multiple control lines may be used for each antenna subsystem.

A plurality of transmit and receive lines 308a-n couples the antenna system and the radio system for communicating transmitted and received radio signals. Though the number of transmit and receive lines and the number of control lines depicted corresponds with the number of antenna subsystems depicted, that is not necessary. More or fewer such lines can be used as can multiplexing and switching techniques. In one embodiment the antenna system includes a controller 324 which receives the control signals and the transmit and receive signals. The controller can route the signals to the appropriate antenna subsystem and radio. The term 'line' is used herein to identify a communication path and does not necessarily represent a physical connection.

The radio system 304 includes a radio sub-system 322. The radio sub-system 322 includes a plurality of radio transmitter/receivers (radios) 310a-n and a MIMO signal processing module (the signal processing module) 312. The plurality of radios 310an is in communication with the MIMO signal processing module. The radios generate radio signals which are transmitted by the antenna system 302 and receive radio signals from the antenna system. In one embodiment each antenna subsystem 303a-n is coupled to a single corresponding radio 310a-n. Although each radio is depicted as being in communication with a corresponding antenna element by a transmit and receive line, more or fewer such lines can be used. In addition, in one embodiment the radios can be controllably connected to various ones of the antenna subsystems by multiplexing or switching.

The signal processing module 312 implements the MIMO processing. MIMO processing includes the processing to send information out over two or more radio channels on two or more antennas and to receive information via multiple radio channels and antennas as well. The signal processing module 312 can combine the information received via the multiple antenna subsystems into a single data stream. The signal processing module 312 may implement some or all of the media access control (MAC) functions for the radio system and control the operation of the radios so as to act as a MIMO system.

A central processing unit (CPU) 314, or processor, is in communication with the signal processor module 312. The CPU 314 may share some of the MAC functions with the signal processing module 312. In addition, the CPU can include a data traffic control module 315 which .performs data traffic control which can include, for example, routing associated with data traffic on a back haul connection, such as a DSL connection, and/or TCP/IP routing.

In one embodiment the antenna control module 321 is provided with or has access to a signal quality metric for each received signal and/or transmitted signal on a communication link. The signal quality metric can be provided from the MIMO signal processing module 312. The MIMO signal processing module has the ability to take into account MIMO processing before providing a signal quality metric for a communication link between the wireless communication device 300 and another device such as a station. For example, for each communication link the MIMO signal processing module 112 can select from one or more MIMO techniques such as receive diversity, maximum ratio combining, spatial multiplexing, and the like. The signal quality metric received from the signal processing module, for example, data through put or error rate, can vary based upon the MIMO technique being used. A signal quality metric, such as received signal strength, can also be supplied from one or more of the radios 310a-n. Typically, the radios would not take into account MIMO techniques, such as spatial multiplexing. The antenna controller 321 uses that information to generate the control signals for the antenna sub-systems that are transmitted via the control lines 106a-n. Alternatively, other elements of the radio system 304 can generate the control signals.

In one embodiment as was mentioned above, the signals received and/or transmitted by the radios 310a-n are combined, for example by maximum ratio combining, in the MIMO signal processor 312 or by the controller 324. For example, when conditions do not permit receiving (or transmitting) different data over each of the radios, the same data is transmitted (or received) by each radio. Rather than selecting the signal from one of the radios, the MIMO signal processor 312 and/or the controller 324 can combine some or all of the received signals in a weighted manner. In some circumstances, the weight assigned to one radio's signal can be zero.

The methods described can be implemented within several of the functional blocks of Figure 3, for example, in the MIMO signal processing module 312 or the CPU 324. In addition, the methods or functions can be separated into components or modules that are performed by multiple blocks depicted in Figure 3. In one embodiment, the elements indicated as 320 in Figure 3 are implemented as a radio card (for example, a MIMO WLAN PCI card) which is coupled to the processor by a PCI (peripheral component interconnect) bus.

In one embodiment, multiple control layers or feedback loops are implemented in the communication device 300 to enhance the performance of the device. In one example, automatic gain control (AGC) is implemented by the radio system 304 in order to improve the quality of communications. In general, AGC is implemented by the radio system 304 in a manner such that adjustments to communications are made on the order of microseconds.

In another example, a feedback loop based on MIMO channel estimation is implemented by the radio system 304. In particular, the MIMO channel estimation is based on calibration packets transmitted and received in the network of Figure 1. In general, adjustments made by the radio system 304 based on such channel estimates occur at a rate slower than the adjustments made based on AGC. The difference may be an order of magnitude or more.

In another example, a rate setting feedback loop is implemented by the radio system 304. For example, based on measures such as packet loss, error rate, or other quality measures, the radio system 304 may adjust encoding schemes or other rate affecting variables to ensure an adequate balance between data rates and reception quality. In general, adjustments made based on the rate setting feedback loop occur on the order of milliseconds.

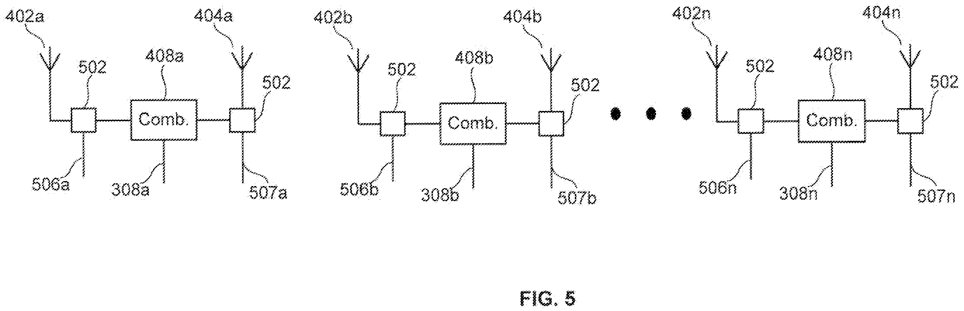

As noted each of the feedback loops described above, AGC, MIMO channel estimation, and rate setting, cause adjustments at significantly different time differences, i.e., orders of magnitudes of seconds. Advantageously, this allows a diverse approach to feedback control where the different control mechanisms do not directly interfere with each other. In one embodiment, as described herein, an additional, combination feedback control loop is implemented by the radio system 304. This additional feedback control loop is described below with respect to Figures 4 and 5. In general, this additional feedback loop is based on combining signals received by multiple antennas corresponding to a single radio. While the advantages of using a fixed ratio in combining the received signals are also described herein, other advantages are offered by selectively altering the manner in which signals are combined. In one embodiment, these adjustments are made on the order of a second. Thus, advantageously, an additional feedback loop with a different order of magnitude in adjustment time is implemented by the radio system 304. It will be appreciated that each of these feedback loops may be implemented as a module in the radio system 304, such as in the CPU 314.

Figure 4 is a functional block diagram of an embodiment of antenna subsystems 303a-n from the antenna system 302 of Figure 3. Each antenna subsystem includes a first antenna 402 and a second antenna 404. The second antenna 404 is connected to a controlled phase shifter 406. In one embodiment, the phase shifter 406 is an analog component that operates in the analog domain. The control lines 306a-n from Figure 3 are coupled to and control each of the controlled phase shifters 406a-n. Though two antennas are depicted for each antenna subsystem, in other embodiments, more than two antennas are used. In one of those embodiments, each of the additional antennas includes an associated control phase shifter. Additionally, the amplitude and frequency characteristics for each antenna can also be controlled, e.g., capacitance can be adjustable. Each of the controlled phase shifters 406a-n and each of the first antennas 402a-n are coupled to their respective combiner 408a-n. In one embodiment, the combiner 408 is an analog component that operates in the analog domain. The transmit and receive lines 308an from Figure 3 are in communication with each of their respective combiners 408a-n.

In one embodiment, for example, combining the two signals from the first antenna and the second antenna causes approximately a three dB loss in power plus the loss in the combiner itself. The phase shifter is controlled to avoid cancellation from the combination of the two signals from the first and second antennas. In one embodiment the first and second antennas for each of the radios are physically separate from each other and from the antennas of the other radios as is allowed by the physical constraints of the wireless communication device. Due to the different locations of the first and second antennas, each can receive different Eigen modes of the same transmitted signal. Using the phase shifter to avoid cancellation, the Eigen modes from the two antennas are combined in the combiner. This does not necessarily produce a stronger signal. However, throughput can be improved due to the increasing number of Eigen modes that are combined even when the combined signal is weaker.

In one embodiment, all of the antennas are omni-directional antennas. Alternatively, each of the antennas is a directional antenna focused or directed on a different direction or region than the other antennas. In general, for each of the radios, each antenna is exposed to different spatial modes. The exposures can be differed through distance (separation of the antennas) patterns of the antennas and/or polarization of the antennas.

Some embodiments include antenna diversity, where the system benefits by including antennas having different gain patterns, unlike conventional systems that typically include an array of identical antenna elements with a common gain pattern. For example, in some embodiments, an antenna subsystem 303 can include a first antenna 402 of one antenna type and a second antenna 404 of a second antenna type. For example, according to some embodiments, each antenna subsystem 303a-n can include the same combination of antenna types, while in other embodiments, each of the antenna subsystems 303a-n can include different combinations of antenna types.

Various types of antennas can be employed in an antenna subsystem 303 including omni-directional antennas, directional antennas, or configurable antenna systems such as direction-agile antennas. In one embodiment, the antenna sub-system includes one or more directional antenna systems that can be directed or steered (for both transmitting and receiving) in more than one direction or pattern. Such types of antenna systems are sometimes referred to as direction-agile antennas. Alternatively, the antenna subsystem can include a one or more single directional antennas.

For example, in one embodiment, antenna 402 of each of the antenna subsystem 303a-n can be a directional antenna while the antenna 404 is an omni-directional antenna. In other embodiments, antenna subsystems 303a-n can include antenna subsystems with more than one combination of antenna types. For example, antenna subsystems 303a-g can include an antenna 402 that is directional and an antenna 404 that is omni-directional antenna, while antenna subsystems 303h-n can include an antenna 402 and 404 of that are both directional antennas. These combinations are merely examples of possible antenna combinations. Other types of combinations are also possible.

Some embodiments also benefit from geographic diversity of the antenna subsystems and/or the antennas of each antenna subsystem. For example, the position of the antennas 402 and 404 included in the antenna subsystems 303a-n can vary. For example, some of the antenna subsystems can have the antennas 402 and 404 placed in a first configuration, while the rest of the antenna subsystems can have the antennas 402 and 404 placed in one or more different configurations. For example, in one embodiment, a first set of antenna subsystems 303 can be mounted along a first side of a case of wireless communication device 300, while a second set of antenna subsystems 303 can be mounted along a second side of a case of the wireless communication device 300. In one embodiment, the antennas 402 and 404 are separated by at least an eighth of a predetermined wavelength. In some embodiments, antennas of the antenna subsystems 303 can be mounted in different configurations. For example, antenna 402 might be mounted along one side of the case of the wireless communication device 300 while antenna 404 can be mounted along a second side (for example, opposite the first side) of the case of the wireless communication device 300. The embodiments are merely examples of possible configurations utilizing geographic diversity. Other configurations are possible.

Antenna diversity and/or geographic diversity as described herein can provide improved performance in indoor environments where walls, furniture, and other obstructions may be present that could interfere with wireless signals. Unlike in free space, in such an environment spatially diverse antennas will likely receive instances of the same signal with different amplitudes and phases resulting from reflections. Such diversity allows the different antennas corresponding to the same radio to experience the multi-path environment differently. As noted above, the difference in experience, e.g., receiving different Eigen modes, can result in increased performance even where the combined signal is not stronger in terms of energy.

For example, the present systems and methods may advantageously be used in orthogonal frequency division multiplexing (OFDM) communications where communications comprise a plurality of subtones. The multiple antennas corresponding to one radio receive the same subtone and the received signals are combined. Having multiple impressions of the same subtone provides a richer experience and allows for improved communication. In particular, as the signal at each antenna is combined, the contributions from the antennas with different placements are combined to create a virtual placement. In effect, the virtual placement of the combined contributions moderates the actual placement of the contributing antennas. It will be appreciated that such advantageous effects are not limited to OFDM systems.

In the embodiments described herein where the amplitude, phase, and frequency characteristics of the antennas are adjustable, the systems and methods allow customization of the virtual placement. For example, the virtual placement can be changed responsive to changes in the multi-path environment or other factors such as quality metrics. This responsiveness eliminates the need to provide large numbers of expensive components in different static configurations. Rather the improved functionality can be achieved by manipulation of a smaller number of configurable antenna sub systems. This customization capability facilitates the combination feed back loop described herein.

In one particular example, a communication device as described herein receives and OFDM signal comprising a plurality of subtones. Due to the multi-path environment, one of the antennas associated with a particular combiner and radio experiences fading in the higher subtones. The second antenna corresponding to the particular combiner and radio is a predetermined distance away, e.g., one half of a predetermined wavelength. Because of the positioning, the second antenna experiences fading on the lower subtones. In this situation, the subtones are all received simultaneously. Thus, no time based multiplexing is possible. If the signal of one or the other antennas is taken alone, the resulting signal will be missing either information from high tones or low tones. However, if the signals are combined as discussed herein, information on any of the tones may be derived from the combined signal. While the combined signal may be of lower power, it provides more information than by selecting on or the other.

In one embodiment, the ratio of at which the signals from the first antennas 402 and second antennas 404 are combined is fixed. For example, a predetermined ratio, such as 50/50 may be used for combining the signals from each antenna. Other ratios may also be used. Similarly, a different ratio may be selected for each antenna subsystem or multiple antenna subsystems may use the same predetermined ratio. As noted herein, it may be advantageous to use a fixed ratio even when the resulting signal is not as strong as the signal received from a single one of the antennas. This results from the reception of different modes by the different antennas in a highly multi-path environment. The phase offset between the antennas may also be predetermined and fixed. The offsets and ratios may be optimized for different channels or may be optimized according to other design criteria.

Figure 5 is a functional block diagram of an embodiment of antenna subsystems 303a-n from the antenna system 302 of Figure 3. Elements with the same reference number as those in Figure 4 function in the same manner as was described in connection with Figure 4.

Figure 5 represents an embodiment of the more general case where the phase, amplitude, and frequency characteristics of each of the antennas can be controlled by a phase, frequency, and/or amplitude controller 502 which is responsive to a control line 506 or 507. In one embodiment, the controller 502 is an analog component operating in the analog domain. The control lines 506 and 507 provide a control signal in the same manner as control line 306 of Figure 3. In one example embodiment, the phase/frequency/amplitude controllers are not present. Though each antenna subsystem is shown with two antennas, more than two antennas can be used. Preferably, each of the antennas in an antenna pair (or group) has spatial diversity from the other member(s).

The presence of the phase/frequency/amplitude controllers 502 permit the radio system 304 to select the optimum mixing of the signals from the pairs of antennas. The optimum can be defined in terms of power, bit error rate and/or data through put or other criteria selected by the system user or system designer. In one case the phase/frequency/amplitude controllers can operate as a switch to allow one of the two antennas to be selected with the other antenna switched off. In the opposite case, the signals from the two antennas are combined with no changes to the phase or amplitude of their signals. Additionally, for each of the antennas, only the phase, only the frequency, only the amplitude or some combination can be controllably adjusted. In some embodiments each of the antennas that are paired together has one or more different characteristics. For example, the members of the antenna pairs can have different frequency characteristics. Alternatively, one or both of the antennas in a pair can be tunable in one or more of the following characteristics: phase, gain and frequency response.

In a further embodiment each antenna in a pair (or group) of antennas is optimized for a different subset of channels. For example, in a system with 36 frequency channels, the channels can be divided into two groups and each of the antennas in a pair can be optimized for one of the groups. Alternatively, the channels can be divided into smaller groups and more antennas can be used. In one embodiment each antenna can be switched on or off via control lines 506 and 507. Alternatively, in another version the signals can be combined with a combiner.

In one embodiment, the controllers 502 and combiners 408 are used to implement the combination feedback loop described above. For example, the CPU, or processor 314, determines one or more receive signal quality metrics, e.g., packet loss, error rate, or other metric, using a particular combination setting or ration, e.g., a 50/50 ratio. In one embodiment, responsive to values of the one or more quality metrics, the processor 314 alters the combination setting. For example, in one embodiment, when the quality metrics exceed or fall below predetermined thresholds, the processor alters the combination setting to compensate. In another embodiment, the processor performs a sweep of combination settings over a period of time in order to determine one or more combination settings that result in acceptable quality metrics. This sweep operation may be performed periodically or in response to changes in the quality metrics. Advantageously, such a sweep operation would allow the communication device to adjust to an environment that is highly multi-path and in which the multi-path environment changes. Further, as noted above, adjustments based on this combination feedback control loop may be performed on the order of a second to provide additional control loop diversity in time with respect to the other control loops described herein.

In one embodiment, the quality metrics at different combination settings are stored in a matrix. In one embodiment a different matrix is stored for each other device in communication with the wireless communication device. In this manner, the combination settings may be individualized to other device to provide enhanced communication with the wireless communication device. This is highly advantageous as the multi-path environment for communications between various devices may differ substantially. In one embodiment, the processor is configured to apply combination settings based on the matrix that pertains to the other device with which the wireless communication device is communicating.

Those of skill will appreciate that the various illustrative logical blocks, modules, and algorithm steps described in connection with the embodiments disclosed herein can often be implemented as electronic hardware, computer software, or combinations of both. To clearly illustrate this interchangeability of hardware and software, various illustrative components, blocks, modules, and steps have been described above generally in terms of their functionality. Whether such functionality is implemented as hardware or software depends upon the particular system and design constraints imposed on the overall system. Skilled persons can implement the described functionality in varying ways for each particular system, but such implementation decisions should not be interpreted as causing a departure from the scope of the invention. In addition, the grouping of functions within a module, block or step is for ease of description. Specific functions or steps can be moved from one module or block without departing from the invention.

The various illustrative logical blocks and modules described in connection with the embodiments disclosed herein can be implemented or performed with a general purpose processor, a digital signal processor (DSP), an application specific integrated circuit (ASIC), a field programmable gate array (FPGA) or other programmable hardware device, discrete gate or transistor logic, discrete hardware components, or any combination thereof designed to perform the functions described herein. A general-purpose processor can be a microprocessor, but in the alternative, the processor can be any other hardware processor, controller, or microcontroller. A processor can also be implemented as a combination of computing devices, for example, a combination of a DSP and a microprocessor, a plurality of microprocessors, one or more microprocessors in conjunction with a DSP core.

The steps of a method or algorithm described in connection with the embodiments disclosed herein can be embodied directly in hardware, in a software module executed by a processor, or in a combination of the two. A software module can reside in the computer or processor accessible or readable storage media including RAM memory, flash memory, ROM memory, EPROM memory, EEPROM memory, registers, hard disk, a removable disk, a CD-ROM, or other form of storage medium such as a computer readable storage medium. An exemplary storage medium can be coupled to the processor such that the processor can read information from, and write information to, the storage medium. In the alternative, the storage medium can be integral to the processor. The processor and the storage medium can reside in an ASIC.

The above description of the disclosed embodiments is provided to enable any person skilled in the art to make or use the invention. Various modifications to these embodiments will be readily apparent to those skilled in the art, and the generic principles described herein can be applied to other embodiments without departing from the scope of the invention. Thus, it is to be understood that the description and drawings presented herein represent a presently preferred embodiment of the invention and are therefore representative of the subject matter, which is broadly contemplated by the present invention. It is further understood that the scope of the present invention fully encompasses other embodiments that may become obvious to those skilled in the art.

## Claims

1. A multiple-in, multiple-out (MIMO) radio system for use in a multi-path environment, the system comprising:
a plurality of antenna subsystems (303a-n); and
a MIMO processor (312);
wherein at least one of the plurality of antenna subsystems (303a-n) comprises:
a plurality of antennas (402a-n, 404a-n), a plurality of controlled phase shifters (406a-n), and a combiner (408a-n) configured to combine signals received via the plurality of antennas in a ratio, wherein each but one of the plurality of antennas is connected to the combiner via a respective one of said phase shifters, wherein at least one of the plurality of antennas (402a-n, 404a-n) is a directional-agile antenna and at least one of the plurality of antennas is an omni-directional antenna, wherein the directional-agile antenna is directed for both transmitting and receiving in more than one direction or pattern;
wherein the directional-agile antenna and omni-directional antenna are positioned at different locations to receive different Eigen modes of the same transmitted signal;
wherein the system further comprises a radio (310a-n) for each of the plurality of antenna subsystems configured to demodulate the combined signal; and
wherein the MIMO processor (312) is configured to select a MIMO processing technique from a group comprising maximum ratio combining and spatial multiplexing;
wherein the MIMO processor (312) is further configured to, when using maximum ratio combining, produce a single data stream from the plurality of demodulated signals by combining the plurality of demodulated signals in a weighted manner wherein at least one of the plurality of demodulated signals is assigned a weight of zero; and
wherein a central processing unit (314) implements a combination feedback loop configured to selectively alter the manner in which the signals received by multiple antennas corresponding to a single radio are combined.

2. The MIMO radio system of claim 1, further comprising a case configured to house the plurality of antenna subsystems (303a-n), the plurality of radios (3 lOa-n), and the MIMO processor (312), wherein the plurality of antennas (402a-n, 404a-n) of each antenna subsystem (303a-n) are positioned on opposite sides of the case.

3. The MIMO radio system of claim 1, wherein the plurality of antennas are separated by at least an eighth of a predetermined wave length.

## Patentansprüche

1. MIMO-Funksystem (Multiple-In, Multiple-Out) zur Verwendung in einer Umgebung mit mehreren Pfaden, wobei das System Folgendes umfasst:
eine Vielzahl von Antennenteilsystemen (303a-n); und
einen MIMO-Prozessor (312);
wobei mindestens eines der Vielzahl von Antennenteilsystemen (303a-n) Folgendes umfasst:
eine Vielzahl von Antennen (402a-n, 404a-n), eine Vielzahl von gesteuerten Phasenschiebern (406a-n) und einen Kombinierer (408a-n), der konfiguriert ist, um über die Vielzahl von Antennen empfangene Signale in einem Verhältnis zu kombinieren, wobei jede außer einer der Vielzahl von Antennen über einen entsprechenden einen der Phasenschieber mit dem Kombinierer verbunden ist, wobei mindestens eine der Vielzahl von Antennen (402a-n, 404a-n) eine richtungsagile Antenne ist und mindestens eine der Vielzahl von Antennen eine Rundstrahlantenne ist, wobei die richtungsagile Antenne sowohl zum Senden als auch Empfangen in mehr als einer/einem Richtung oder Muster ausgerichtet ist;
wobei die richtungsagile Antenne und die Rundstrahlantenne an unterschiedlichen Stellen positioniert sind, um unterschiedliche Eigenmoden desselben gesendeten Signals zu empfangen;
wobei das System ferner eine Funkvorrichtung (310a-n) für jedes der Vielzahl von Antennenteilsystemen umfasst, das konfiguriert ist, um das kombinierte Signal zu demodulieren; und
wobei der MIMO-Prozessor (312) konfiguriert ist, um aus einer Gruppe, die MRC (Maximum Ratio Combining) und räumliches Multiplexing umfasst, ein MIMO-Verarbeitungsverfahren auszuwählen;
wobei der MIMO-Prozessor (312) ferner konfiguriert ist, um beim Verwenden von MRC durch das Kombinieren der Vielzahl von demodulierten Signalen auf eine gewichtete Art und Weise aus der Vielzahl von demodulierten Signalen einen einzelnen Datenstrom herzustellen, wobei mindestens einem der Vielzahl von demodulierten Signalen ein Gewicht null zugeordnet ist; und
wobei eine zentrale Verarbeitungseinheit (314) eine Kombinationsrückkopplungsschleife implementiert, die konfiguriert ist, um die Art und Weise, auf der die Signale, die von mehreren Antennen empfangen werden, die einer einzelnen Funkvorrichtung entsprechen, kombiniert werden, selektiv zu ändern.

2. MIMO-Funksystem nach Anspruch 1, ferner umfassend ein Gehäuse, das konfiguriert ist, um die Vielzahl von Antennenteilsystemen (303a-n), die Vielzahl von Funkvorrichtungen (310a-n) und den MIMO-Prozessor (312) unterzubringen, wobei die Vielzahl von Antennen (402a-n, 404a-n) jedes Antennenteilsystems (303a-n) auf gegenüberliegenden Seiten des Gehäuses positioniert sind.

3. MIMO-Funksystem nach Anspruch 1, wobei die Vielzahl von Antennen um mindestens ein Achtel einer vorgegebenen Wellenlänge getrennt sind.

## Revendications

1. Un système radio à entrées multiples, sorties multiples (MIMO) destiné à une utilisation dans un environnement à trajets multiples, le système comprenant :
une pluralité de sous-systèmes d'antenne (303a-n), et
un processeur MIMO (312),
où au moins un sous-système de la pluralité de sous-systèmes d'antenne (303an) comprend :
une pluralité d'antennes (402a-n, 404a-n), une pluralité de déphaseurs régulés (406a-n) et un combineur (408a-n) configuré de façon à combiner des signaux reçus par l'intermédiaire de la pluralité d'antennes dans un rapport, où chaque antenne sauf une de la pluralité d'antennes est raccordée au combineur par l'intermédiaire d'un déphaseur respectif desdits déphaseurs, où au moins une antenne de la pluralité d'antennes (402a-n, 404a-n) est une antenne directionnellement agile et au moins une antenne de la pluralité d'antennes est une antenne omnidirectionnelle, où l'antenne directionnellement agile est dirigée pour à la fois l'émission et la réception dans plus d'une direction ou diagramme,
où l'antenne directionnellement agile et l'antenne omnidirectionnelle sont positionnées à des emplacements différents de façon à recevoir différents modes propres du même signal transmis,
où le système comprend en outre une radio (310a-n) pour chaque sous-système de la pluralité de sous-systèmes d'antenne configurée de façon à démoduler le signal combiné, et
où le processeur MIMO (312) est configuré de façon à sélectionner une technique de traitement MIMO à partir d'un groupe comprenant la combinaison de rapports maximaux et le multiplexage spatial,
où le processeur MIMO (312) est configuré en outre de façon à, lors de l'utilisation de la combinaison de rapports maximaux, produire un flux de données unique à partir de la pluralité de signaux démodulés par la combinaison de la pluralité de signaux démodulés d'une manière pondérée, où à au moins un signal de la pluralité de signaux démodulés est affecté un poids de zéro, et
où une unité de traitement centrale (314) met en œuvre une boucle de rétroaction de combinaison configurée de façon à modifier de manière sélective la manière dont les signaux reçus par une pluralité d'antennes correspondant à une radio unique sont combinés.

2. Le système radio MIMO selon la Revendication 1, comprenant en outre un boîtier configuré de façon à loger la pluralité de sous-systèmes d'antenne (303a-n), la pluralité de radios (310a-n) et le processeur MIMO (312), où la pluralité d'antennes (402a-n, 404a-n) de chaque sous-système d'antenne (303a-n) sont positionnées sur des côtés opposés du boîtier.

3. Le système radio MIMO selon la Revendication 1, où la pluralité d'antennes sont séparées par au moins un huitième d'une longueur d'onde prédéterminée.
